(19) **Europäisches Patentamt**

**European Patent Office**

**Office européen des brevets**

(11) Veröffentlichungsnummer: **0 270 913**
**B1**

(12) # EUROPÄISCHE PATENTSCHRIFT

(45) Veröffentlichungstag der Patentschrift:
09.05.90

(51) Int. Cl.⁵: **F16B 13/06**, F16B 13/14

(21) Anmeldenummer: 87117333.2

(22) Anmeldetag: 24.11.87

(54) **Spreizdübel.**

(30) Priorität: 26.11.86 DE 3640312

(43) Veröffentlichungstag der Anmeldung:
15.06.88 Patentblatt 88/24

(45) Bekanntmachung des Hinweises auf die Patenterteilung:
09.05.90 Patentblatt 90/19

(84) Benannte Vertragsstaaten:
AT BE CH DE ES FR GB GR IT LI LU NL SE

(56) Entgegenhaltungen:
EP-A- 0 037 091
AT-B- 325 832
DE-A- 2 026 456
DE-A- 3 447 415
DE-B- 2 254 602
FR-A- 1 340 396
FR-A- 2 260 017
GB-A- 406 083
GB-A- 598 730

(73) Patentinhaber: Tox-Dübel-Werk R.W. Heckhausen
GmbH & Co. KG, D-7762 Bodman-Ludwigshafen(DE)

(72) Erfinder: Riedel, Josef, Hutbühlstrasse 6,
D-7770 Überlingen 12(DE)

(74) Vertreter: Koch, Günther, Dipl.-Ing. et al, Postfach 920,
D-8000 München 33(DE)

**Beschreibung**

Die Erfindung bezieht sich auf einen Spreizdübel der im Oberbegriff des Patentanspruchs 1 angegebenen Gattung. Ein Spreizdübel dieser Bauart, der sowohl als Aufspreizdübel als als auch als Knickdübel verwendet werden kann, ist in der DE-B 2 254 602 und der AT-A 325 832 beschrieben.

Bei diesem bekannten Allzweckdübel ist der Schaft, der Ringrippen trägt, als massive Hülse ausgebildet, die durch Längsschlitze in Spreizsegmente unterteilt ist. Diese Spreizsegmente werden über einen wesentlichen Teil der Schaftlänge verlaufend nach außen gedrückt, und diesem Spreizdruck über eine wesentliche Länge des Schaftes können häufig die Bohrlochwände in Leichtbaustoffen oder weichem und porösem Mauerwerk nicht standhalten, so daß sie zerstört werden und die Haltefunktion verlorengeht.

Der Erfindung liegt daher die Aufgabe zugrunde, einen gattungsgemäßen Dübel derart zu verbessern, daß er unter Aufrechterhaltung seiner Spreizfunktion in massivem Mauerwerk wie Beton auch bei Leichtbauwänden eine zuverlässige Verankerung gewährleistet, ohne die Bohrlochwandungen einzudrücken und zusammenbrechen zu lassen.

Gelöst wird die gestellte Aufgabe durch die im Kennzeichnungsteil des Patentanspruchs 1 angegebenen Merkmale.

Durch die Erfindung wird erreicht, daß eine feste Verankerung sowohl in Hohlbaustoffen durch Verknotung (Ausknicken) auf der Rückseite als auch in Massivwänden gewährleistet ist. Bevorzugt kann der Dübel auch in Leichtbaustoffen wie Yton usw. verwendet werden. Der erfindungsgemäß vorgesehene dünne Mantel im Schaftteil des Dübels wirkt nur als Träger der Schraubenwände, nicht aber als Spreizelement. Dieser dünne Mantel hat lediglich die Aufgabe, beim Einsetzen in das Bohrloch die Formgestalt des Dübels aufrechtzuerhalten und die Schraubengänge der Schraubenwände in ihrem vorbestimmten Abstand zu belassen, es sei denn, daß bei einem zu kurzen Dübelloch eine Stauchung angestrebt wird, die durch Einschlagen des Dübels erfolgen kann, weil diese dünne Mantelhülse eine axiale (und radiale) Federung gewährleistet. Beim Eindrehen oder Einschlagen eines Spreizkörpers wird der dünne Mantel zerstört, und es können dann die als Spreizelemente allein wirksamen Schraubengänge der Wendel in die Bohrlochwandung eingreifen. Zwischen den Schraubengängen bleibt die Bohrlochwandung weitgehend von Spreizdrücken frei, so daß keine Beschädigung zu befürchten ist. Eine bevorzugte Linksgängigkeit der Schraubenwendel gewährleistet beim Eindrehen der üblichen mit Rechtsgewinde versehenen Schrauben eine axiale Beanspruchung des Dübelschaftes durch die Reibung, die die Schraubenwendel an der Bohrlochwandung ausübt.

Es ist zwar durch die FR-A 1 340 396 bereits ein Dübel mit umlaufenden Stützrippen in Form einer Schraubenwendel bekanntgeworden. Bei diesem bekannten Dübel schließen die einzelnen Gänge der Schraubenwendel unmittelbar aneinander an und es ist nicht vorhersehbar, an welchen Stellen der Dübelmantel bei Eindrehen der Schraube aufplatzt, da im Spreizteil des Dübels keine Längsschlitze vorhanden sind, die ein definiertes gleichmäßiges radiales Aufspreizen gewährleisten.

Durch die an sich bekannte massive Ausbildung des Dübelfußes wird erreicht, daß der Dübel als Ausknickdübel Verwendung finden kann. Sobald nämlich der Schraubenkopf an den zu befestigenden Teil anliegt und weitergedreht wird, knickt der freistehende Dübelteil aus und bildet eine Verknotung auf der Rückseite des Hohlraumes. Um dieses Ausknicken zu erleichtern, ist am Anfang des Fußteiles eine Sollknickstelle in Form einer Hohlkehle vorgesehen.

Das Wesen der Erfindung besteht daher darin, daß der Dübelschaft im wesentlichen von der Schraubwendel als Spreizsegment gebildet wird und der die Wendel tragende dünnwandige Mantel nur dazu dient, beim Einstecken des Dübels ins Bohrloch die Position, d.h. den Abstand der Wendel, aufrechtzuerhalten. Beim Eindrehen eines Spreizkörpers in den Dübel wird dieser dünne Mantel ohne Behinderung der Spreizfunktion zerstört und ist demgemäß für die Ausziehwerte nicht wirksam. Die eigentlichen Verankerungselemente sind die aufspreizbaren Wendel, die eine sichere Übertragung auf Mauerwerk jeder Art gewährleisten.

Nachstehend wird ein Ausführungsbeispiel der Erfindung anhand der Zeichnung beschrieben. In der Zeichnung zeigen:

Fig. 1 eine Seitenansicht eines erfindungsgemäß ausgebildeten Spreizdübels;

Fig. 1a eine axiale Ansicht des Dübels nach Fig. 1 von der Dübelfußseite her betrachtet;

Fig. 1b eine axiale Ansicht des Dübels nach Fig. 1 von der Dübelkopfseite her betrachtet;

Fig. 2a einen Axialschnitt des in Fig. 1 dargestellten Dübels;

Fig. 2b eine perspektivische Ansicht des Dübels gemäß Fig. 1;

Fig. 3 eine schematische Darstellung einer Dübelmontage mit Spreizung in Vollbaustoff;

Fig. 4 eine schematische Darstellung des Dübels nach Fig. 1 u.2 in der Montage in Vollbaustoff bei zu kurzem Dübelloch mit gestauchtem Dübelschaft;

Fig. 5 eine schematische Ansicht des Dübels nach Fig. 1 bei der Durchsteckmontage und

Fig. 6 eine schematische Darstellung des Dübels bei der Montage in Hohlbaustoffen mit Spreizung bzw. Verknotung des Dübelschaftes.

Der Dübel weist einen Dübelhals 10, einen Dübelfuß 12 und einen zwischen Dübelfuß und Dübelhals befindlichen spreizbaren Dübelschaft 14 auf.

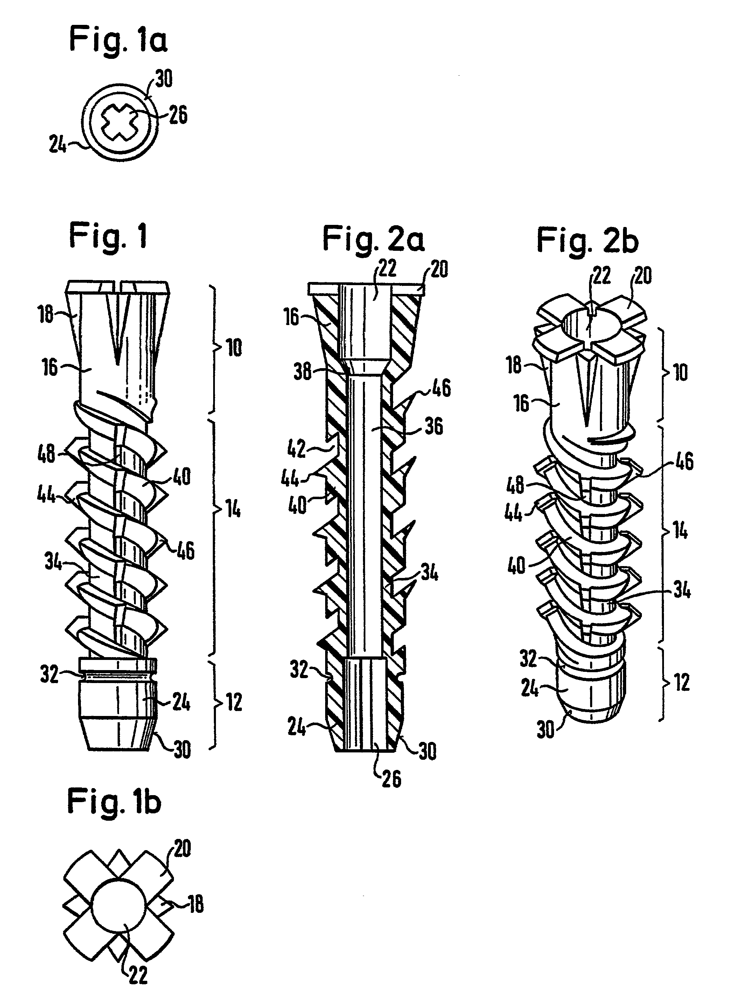

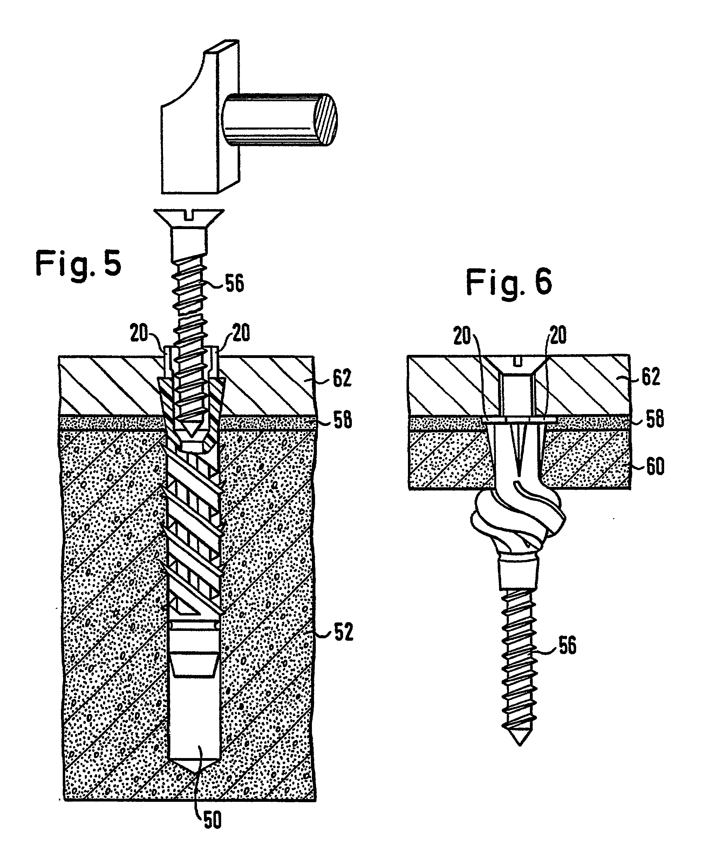

Der Dübelhals 10 besteht aus einer geschlossenen Hülse 16, die außenseitig der Drehsicherung dienende, sich axial nach dem Dübelschaft 14 hin verjüngende Rippen 18 aufweist, von denen - wie aus Fig. 1b ersichtlich - vier im gleichen Winkelabstand von 90° zueinander angeordnet sind. Zwischen den Rippen 18 sind am oberen Ende der geschlossenen Hülse 16 radial nach außen vorstehende Flanschlappen 20 angeformt, die ein Kreuz bilden und sich bei der Durchsteckmontage (Fig. 5) nach oben umlegen können. Der Dübelhals 10 weist ein Schraubeneinsatzloch 22 mit einem verhältnismäßig großen Durchmesser auf, so daß eine paßgerechte Schraube mit ihrem Schaft hindurchtreten kann, ohne eine Spreizwirkung auszuüben.

Der Dübelfuß 12 besteht aus einer geschlossenen Hülse 24 mit axialem Loch 26, in das sich eine paßgerechte Holzschraube ein Gewinde einschneiden kann. Dieses Loch 26 (Fig. 1a) ist im Querschnitt kreuzförmig oder polygonal ausgebildet. Der Dübelfuß 12 weist ein konisch geformtes Einsatzende 30 auf, mit dem er in das Bohrloch eindringt. Eine umlaufende Ringnut 32 befindet sich am Übergang zwischen Dübelfuß 12 und Dübelkörper 14, und diese Ringnut 32 wirkt als Gelenk bzw. als Sollknickstelle, damit sich die Segmente des Dübelkörpers bei Einbau in Hohlstein oder Hohlkörpern frei nach außen ausspreizen können, ohne den Dübelfuß aufzureißen.

Der Dübelschaft 14, der die wesentlichen Erfindungsmerkmale beinhaltet, besteht aus einem inneren dünnen Dübelmantel 34 in Form einer unterbrochenen Distanzhülse, der einen zylindrischen Spreizkanal 36 umschließt, der über eine konische Erweiterung 38 in das Einsatzloch 22 übergeht und einen Durchmesser aufweist, der kleiner ist als der Spreizteil der paßgerechten Spreizschraube. Dieser Dübelmantel 34 trägt integral geformt auf seiner Außenseite eine Schraubenwendel 40, die - wie aus Fig. 1 ersichtlich ist - die Form eines zweigängigen Linksgewindes aufweist. Der Querschnitt dieser Schraubenwendel 40 ist - wie aus Fig. 2a ersichtlich - parallelogrammförmig, er kann jedoch auch rhombisch, trapezförmig oder in Form eines unregelmäßigen Vierecks gestaltet sein. Zwischen den Schraubenwendeln verläuft außerhalb des Dübelmantels 34 eine wendelförmige Nut 42, die wiederum vorzugsweise einen parallelogrammförmigen Querschnitt besitzt. Auf der Außenseite der Schraubenwendel 40 sind an dem dem Dübelhals 10 zugewandten Rand flache Rippen oder Schuppen 44 bzw. 46 angeformt, die Widerhaken am Dübelschaft bilden. Diese Schuppen verlaufen jeweils über 180° mit einem sich verändernden Anstellwinkel gegenüber der Achse, so daß an den Übergangsstellen, wie insbesondere aus Fig. 1 ersichtlich ist, die Rippen oder Schuppen 46 und 44 Sprungstellen aufweisen, wobei die Ebenen der Rippen oder Schuppen an den Übergangsstellen etwa senkrecht aufeinanderstehen.

Der Dübelmantel 34 weist zwischen den einzelnen Gängen der Schraubwendel 40 axiale Schlitze 48 auf, die die Deformation des Dübels erleichtern.

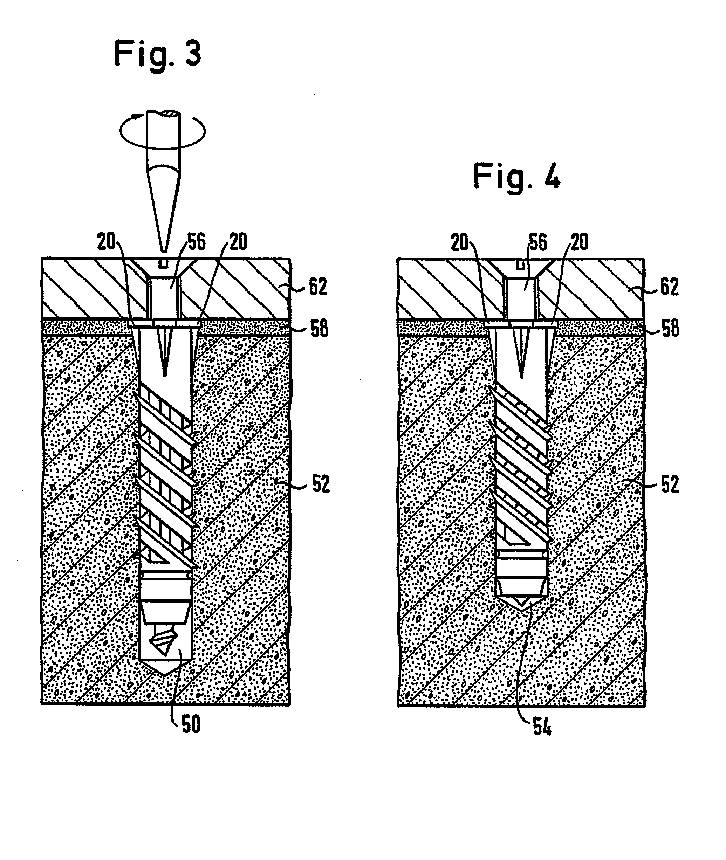

Der Dübel wirkt als Spreizdübel, wenn er in einem paßgerechten Dübelloch 50 (Fig. 3) in einer Vollwand 52 aus Beton eingefügt wird. Beim Eindrehen einer Schraube 56 spreizen sich die von der Wendel gebildeten Segmente nach außen hin, wie dies aus Fig. 3 ersichtlich ist. Die Schraube 56 gräbt sich in den Dübelfuß ein und schneidet sich ihr Gewinde. Hierdurch erfolgt eine axiale Stauchung, wodurch der Spreizdruck erhöht wird.

Die Flanschlappen 20 stützen sich auf der Putzschicht 58 ab, und in diesem Bereich erfolgt keine Spreizung des Dübels. Gemäß Fig. 3 bis 6 ist am Mauerwerk eine Platte 62 festgelegt. Stattdessen könnte durch die Schraube jeder andere Gegenstand befestigt werden.

Gemäß Fig. 4 ist das Dübelloch 54 zu kurz geraten. Trotzdem kann der Dübel in dieses Dübelloch eingeschlagen werden, weil er aufgrund der Schraubwendelanordnung in Verbindung mit dem dünnen Dübelmantel 34 axial gestaucht werden kann, noch bevor die Schraube 56 eingedreht wird. Beim Eindrehen der Schraube erfolgt dann wiederum eine Spreizung innerhalb des Vollmaterials.

Der erfindungsgemäße Dübel ist - wie Fig. 5 zeigt - auch für eine Durchsteckmontage geeignet. In diesem Fall wird der Dübel durch das Loch in der Platte 62 und das Dübelloch eingesetzt, und dann wird die Schraube mittels eines Hammers eingeschlagen, wobei sich die Flanschlappen 20 umlegen, so daß der Dübel auf die gewünschte Tiefe eingeschlagen werden kann.

Gemäß Fig. 6 ist der Dübel in Hohlbaustoffen 60 eingesetzt, und wie ersichtlich hat sich die Schraube in den Dübelfuß ihr Gewinde eingeschnitten und die Wendel sind nach außen hin geknickt und haben sich verknotet, so daß eine feste axiale Verspannung an dem Hohlbaustoff gewährleistet ist.

Zusätzlich zu dem dargestellten Ausführungsbeispiel können auch parallel zur Steigung verlaufende schräggestellte unterbrochene Rippen am Außendurchmesser der Gewindewendel rechts oder links oder beidseitig angebracht werden, die nochmals eine Verstärkung der Verankerung ergeben. Der erfindungsgemäße Dübel wirkt danach als Spreizdübel oder als Knickdübel, je nach dem zur Verwendung kommenden Material, so daß der Dübel sowohl in festem Mauerwerk als auch in Hohlbaustoffen wie Hohlziegeln, Gipskarton usw. Verwendung finden kann.

Durch die Aufteilung des Flansches in radial kreuzförmig vorstehende Flanschlappen wird die Funktion eines Kappendübels erfüllt, wobei jedoch beim Durchschlagen mittels eines Spreizkörpers, d.h. mittels Nagel oder Holzschraube, die Flanschlappen um 90° umgelegt werden und im Bohrloch verschwinden (Durchsteckmontage).

## Patentansprüche

1. Spreiz- und Ausknickdübel aus Kunststoff mit einem massiven Dübelfuß mit axialem Durchgangsloch zum Selbsteinschneiden eines Gewindes, mit einem geschlossenen Dübelhals und mit einem aufspreizbaren, zwischen Dübelfuß und Dübelhals liegenden Spreizelemente bildenden Dübelschaft, der eine mit Längsschlitzen versehene Hülse mit angeformten, außen umlaufenden Stützrippen aufweist, dadurch gekennzeichnet, daß die umlaufenden Stützrippen als Schraubenwendel (40) ausgebildet sind, die die Spreizelemente bilden, wobei die einzelnen Gänge der Schraubenwendel (40) einen Abstand voneinander aufweisen und durch einen im Vergleich zu den Stützrippen dünnwandigen, aufbrechbaren Mantel (34) untereinander verbunden sind, derart, daß zwischen den Gängen der Schraubenwendel (40) eine außen umlaufende wendelförmige Nut (42) mit dem Mantel (34) als Basis gebildet ist, so daß die Stützrippen durch den dünnen Mantel (34) beim Einsetzen in das Bohrloch in ihrer Lage gehalten werden, und wobei die Längsschlitze (48) im Mantel (34) zwischen den Gängen der Schraubenwendel (40) ausgebildet sind.

2. Dübel nach Anspruch 1, dadurch gekennzeichnet, daß die Schraubenwendel (40) linksgängig ausgeführt ist.

3. Dübel nach den Ansprüchen 1 oder 2, dadurch gekennzeichnet, daß der Querschnitt der Schraubenwendel (40) parallelogrammförmig, trapezförmig, sägezahnförmig oder dreieckig ist.

4. Dübel nach Anspruch 1, dadurch gekennzeichnet, daß die Schraubenwendel (40) eine nach außen vorstehende schmale Rippe (44) aufweist.

5. Dübel nach Anspruch 4, dadurch gekennzeichnet, daß die Rippen (44) an dem dem Dübelhals zugewandtem Rand der in Querschnitt trapezförmigen Schraubenwendel (14) ansetzen und im Querschnitt nach außen verjüngt ausgebildet sind und einen scharfkantigen Rand bilden.

6. Dübel nach Anspruch 4, dadurch gekennzeichnet, daß die Rippen (44) jeweils über 180° verlaufend unterschliedlich gegenüber der Dübelachse angestellt sind und daß die Ebenen der Rippen (44) an den Übergangsstellen etwa senkrecht aufeinanderstehen.

7. Dübel nach einem der Ansprüche 1 bis 6, dadurch gekennzeichnet, daß der Dübelschaft eine mehrgängige Schraubenwendel aufweist.

8. Dübel nach einem der Ansprüche 1 bis 7, dadurch gekenneichnet, daß am Dübelhals (10) kreuzförmig angeordnete Flanschlappen (20) vorgesehen sind, die nach oben abbiegbar sind.

9. Dübel nach einem der Ansprüche 1 bis 8, dadurch gekennzeichnet, daß der Dübelfuß (12) ein im Querschnitt kreuzförmiges Gewindeeinschneidloch (26) aufweist.

## Claims

1. An expansion and buckling plug of plastics material comprising a solid plug foot with an axial through-hole for self-cutting of a thread, a closed plug neck and an expandable plug shank lying between the plug foot and plug neck and forming expansion members, said plug shank comprising a sleeve provided with longitudinal slits and having supporting ribs formed thereon and surrounding it externally, characterized in that the surrounding supporting ribs are constructed as a screw helix (40) forming the expansion members, the individual threads of the screw helix (40) being at a distance from each other and being so connected together by a breakable jacket (34), which is thin-walled in comparison with the supporting ribs, that between the threads of the screw helix (40) there is formed an outwardly encircling, helical groove (42) with the jacket (34) as base, such that the supporting ribs are held in position by the jacket (34) during insertion into the bore hole, the longitudinal slits (48) being constructed in the jacket (34) between the threads of the screw helix (40).

2. A plug according to claim 1, characterised in that the screw helix (40) is left handed.

3. A plug according to claim 1 or claim 2, characterized in that the cross section of the screw helix (40) is in the shape of a parallelogram, a trapezium or saw tooth or is triangular.

4. A plug according to claim 1, characterized in that the screw helix (40) comprises a narrow rib (44) projecting outwards.

5. A plug according to claim 4, characterized in that the ribs (44) are attached to the edge facing the plug neck of the cross-sectionally trapeziform screw helix (14) and are constructed to be cross-sectionally outwardly tapered and form a sharp-angled edge.

6. A plug according to claim 4, characterized in that the ribs (44) are each arranged to extend over 180° and differently with respect to the plug axis and in that the planes of the ribs (44) are approximately perpendicular to each other at the transition points.

7. A plug according to any one of claims 1 to 6, characterized in that the plug shank comprises a multi threaded screw helix.

8. A plug according to any one of claims 1 to 7, characterized in that the flange tabs (20) are provided in the form of a cross on the plug neck (10), which flange tabs (20) may be outwardly bent.

9. A plug according to any one of claims 1 to 8, characterized in that the plug foot (12) comprises a cross-sectionally cruciform threadable hole (26).

## Revendications

1.Cheville à expansion et repliement en matière plastique avec un pied de cheville massif avec trou de passage axial pour l'auto-taraudage d'un filet, avec un col de cheville fermé et un fût de cheville formant des éléments d'expansion situé entre le pied de cheville et le col de cheville, ce fût présentant un manchon pourvu de fentes longitudinales avec des nervues de soutien formées sur celui-ci et disposées sur la péripherie extérieure, caractérisée en ce que les nervures de soutien périphériques sont constituées sous forme de filetage hélicoïdal (40) qui forme les éléments d'expansion, tandis que les différents pas du filetage hélicoïdal (40) présentent une distance les uns par rapport aux autres et sont assemblés les uns aux autres par une enveloppe (34) pouvant être brisée et à parois minces par rapport aux nervures de soutien, de façon à ce que, entre les pas du filetage hélicoïdal (40) on o_btienne une rainure (42) hélicoïdale sur la périphérie extérieure ayant pour base l'enveloppe (34), si bien que les nervures de soutien sont maintenues en position par l'enveloppe (34) lorsqu'on effectue l'insertion dans le trou forcé et où les fentes longitudinales (48) sont disposées dans l'enveloppe (34) entre les pas des filetages hélicoïdaux (40).

2. Cheville selon la revendication 1, caractérisée en ce que le filetage hélicoïdal (40) est un filetage à gauche.

3. Cheville selon la revendication 1 ou 2, caractérisée en ce que la section du filetage hélicoïdal (40) est en forme de parallèlogramme, de trapèze, de dents de scie ou de triangle.

4. Cheville selon la revendication 1, caractérisée en ce que le filetages hélicoïdal (40) présente une nervure étroite (44) faisant saillie vers l'extérieur.

5. Cheville selon la revendication 4, caractérisée en ce que les nervures (44) prennent appui sur le bord tourné vers le col de cheville du filetage hélicoïdal (14) de section trapézoïdale, qu'elles sont réalisées en diminuant de section vers l'extérieur et qu'elles forment un bord à arêtes vives.

6. Cheville selon la revendication 4, caractérisée en ce que les nervures (44) sont disposées avec un décalage de 180° par rapport à l'axe de la cheville er que les plans des nervures (44) sont disposés à peu près perpendiculaires l'un à l'autre aus points de transition.

7. Cheville selon l'une des revendications 1 à 6, caractérisée en ce que le fût de cheville présente un filetage hélicoïdal à plusieurs pas.

8. Cheville selon l'une des revendications 1 à 7, caractérisée en ce que des languettes (20) sont disposées en forme de croix sur le col de cheville (10) et peuvent être repliées vers l'extérieur.

9. Cheville selon l'une des revendications 1 à 8, caractérisée en ce que le pied de cheville (12) présente un trou de filet (26) de section cruciforme.

Fig. 1a

Fig. 1

Fig. 2a

Fig. 2b

Fig. 1b

# Fig. 3

# Fig. 4

Fig. 5

Fig. 6